(19) Europäisches Patentamt
European Patent Office
Office européen des brevets

(11) **EP 2 246 679 B1**

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(51) Int Cl.:
*G01K 15/00* *(2006.01)* *G05D 23/19* *(2006.01)*

(21) Anmeldenummer: **10160781.0**

(22) Anmeldetag: **22.04.2010**

(54) **Verfahren und Vorrichtung zur Ermittlung eines Korrekturwertes im Rahmen einer Heizungsregelung**

Method and device for determining a correction value within a heating control device

Procédé et dispositif de détermination d'une valeur de correction dans un dispositif de régulation de chauffage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **28.04.2009 DE 102009019235**

(43) Veröffentlichungstag der Anmeldung:
**03.11.2010 Patentblatt 2010/44**

(60) Teilanmeldung:
**12152755.0**

(73) Patentinhaber: **Techem Energy Services GmbH**
**65760 Eschborn (DE)**

(72) Erfinder:
• **Brümmer, Matthias**
**65779 Kelkheim (DE)**
• **Heide, Alexander**
**64259 Darmstadt (DE)**
• **Kähler, Dr. Arne**
**12683 Berlin (DE)**
• **Ohl, Dr. Jochen**
**64823 Groß-Umstadt (DE)**

(74) Vertreter: **KEIL & SCHAAFHAUSEN**
**Patentanwälte**
**Cronstettenstraße 66**
**60322 Frankfurt am Main (DE)**

(56) Entgegenhaltungen:
**EP-A2- 1 927 812    EP-A2- 2 093 644**
**EP-A2- 2 166 327    DE-A1-102006 040 409**

• **INSEOK YANG ET AL: "First-order compensation for time lag in the dynamic calibration of industrial thermometers; First-order compensation for time lag in the dynamic calibration of thermometers" MEASUREMENT SCIENCE AND TECHNOLOGY, IOP, BRISTOL, GB, Bd. 20, Nr. 1, 20. November 2008 (2008-11-20), Seite 15109, XP020152537 ISSN: 0957-0233**

EP 2 246 679 B1

**Beschreibung**

Die Erfindung betrifft ein Verfahren gemäß dem Oberbegriff des Anspruchs 1 und eine Vorrichtung gemäß dem Oberbegriff des Anspruchs 8 zur Ermittlung eines Korrekturwertes, insbesondere der Vorlauftemperatur einer Heizungsanlage, auf Basis des Messwertes eines Messfühlers und einer Korrekturwertvorgabe einer vorzugsweise wärmeleistungsadaptiven Vorlauftemperaturregelung, welche an einer Heizungsanlage mit einer Heizungsregelung zur Einstellung einer Vorlauftemperatur anschließbar ist. Der ermittelte Korrekturwert wird mit einem Messwert des an die Heizungsregelung anschließbaren Messfühlers zu einem Reglerwert zusammengefasst und einem Anschluss der Heizungsregelung für den Messfühler zugeleitet, so dass die Heizungsregelung die Vorlauftemperatur unter Berücksichtigung des Korrekturwertes einstellt bzw. einstellen kann. Dabei wird eine Kennlinie des Messfühlers durch Vergleich der Messwerte des Messfühlers mit Messwerten des Referenzmessfühlers mit bekannter Kennlinie detektiert bzw. rekonstruiert.

Anwendung findet das Verfahren im Rahmen einer Heizungsregelung, bei der eine den tatsächlichen Wärmebedarf eines Gebäudes berücksichtigende Wärmeadaptionsregelung einer eigentlichen, meist außentemperaturgeführten Heizungsregelung vorgeschaltet ist. Die Wärmeleistungsadaptionsregelung erzeugt eine Korrekturwertvorgabe für die Vorlauftemperatur, welche der Heizungsregelung als veränderter Widerstandsbzw. Reglerwert beispielsweise eines Vorlauftemperaturfühlers mitgeteilt wird. In diesem Fall ist es wichtig, dass die vorgeschaltete Wärmeleistungsadaptionsregelung die Kennlinie des Vorlauftemperaturfühlers (Messfühler) kennt, um die gesonderte Widerstandskorrekturgröße (Korrekturwert) zu bestimmen, welche der durch die Korrekturwertvorgabe vorgegebenen, gewünschten Vorlauftemperaturänderung entspricht. Dies ist besonders wichtig, da die Vorlauftemperatur in der Heizungsanlage durch Beeinflussung des Widerstandswerts des Messfühlers definiert beeinflusst, d.h. abgesenkt oder angehoben, werden soll.

Moderne Heizungsregelungen, wie sie beispielsweise in der EP 1 456 727 B1 oder der DE 10 2005 012 579 A1 beschrieben sind, zielen darauf ab, die Vorlauftemperatur der Heizungsanlage entsprechend dem aktuellen Wärmebedarf des Heizkreises oder Gebäudes vorzugeben, der aus Heizkörperventilstellungen oder Temperaturmessungen im Rahmen der Heizwärmeerfassung bestimmt wird. Aufgrund des bekannten Wärmebedarfs kann so eine sinnvolle Heizungsregelung durch Vorgabe oder Korrektur der Vorlauftemperatur erreicht werden. Gerade bei älteren Heizungen besteht jedoch das Problem, dass die Heizungsregler keinen separaten Eingang zur Vorgabe von Korrektursignalen besitzen, so dass es nicht möglich ist, dem Heizungsregler einen Korrekturwert für die angestrebte Vorlauftemperatur mitzuteilen.

Daher ist es häufig nötig, den durch die Heizungsanlage vorgegebenen und eingestellten, d. h. durch einen Messfühler messbaren, Vorlauftemperaturwert und einen Korrekturtemperaturwert zu einem Vorgabetemperaturwert zusammenzufassen und diesen insbesondere in Form eines Widerstandswertes (Reglerwert) dann der Heizungsregelung vorzugeben. Diese Aufgabe übernimmt häufig die vorgeschaltete Wärmeleistungsadaptionsregelung, welche dazu die Kennlinie des a priori unbekannten Messfühlers der Heizungsanlage ermitteln und eine geeignete Verschiebung des Widerstandswertes durchführen muss. Dies kann durch Einsatz eines Referenzmessfühlers mit bekannter Widerstands-Temperatur-Kennlinie $f_{REF}(R)$ erfolgen, indem die jeweils durch den Referenzmessfühler gemessenen Temperaturwerte mit den gemessenen Widerstandswerten des Messfühlers korreliert werden.

Aus der EP 1 927 812 A2 ist eine Vorrichtung zur Beeinflussung eines Heizungsreglers durch Vorgabe eines Korrekturwertes bekannt, der durch eine

Simulation des Sensorwertes unter Berücksichtigung des gemessenen Sensorwertes gebildet wird. Der simulierte Sensorwert wird dem Heizungsregler aufgeschaltet. Um die Kennlinie eines unbekannten, an die Heizungsregler angeschlossenen Temperaturfühlers zu bestimmen, wird die Verwendung eines Referenztemperatursensors mit bekannter Kennlinie vorgeschlagen. Durch einen Vergleich der Messwerte des Temperaturfühlers mit der unbekannten Kennlinie mit den durch den Referenztemperatursensor ermittelten Temperaturen kann die unbekannte Kennlinie ermittelt werden.

Der Aufsatz Inseok Yang, et.al., "First-order compensation for time lag in dynamic calibration of industrial thermometers", Measurement Science and Technology 20 (2009), Seite 015109, veröffentlicht am 20.11.2008, beschreibt eine Kalibrierung industrieller Thermometer in nicht stationären Temperaturzuständen, bei denen neben einer unbekannten Temperaturkorrektur $\Delta T$ auch unterschiedliche Zeitkonstanten $\Delta_T$ und verschiedene Raten r, r' der Temperaturänderung eines zu kalibrierenden und eines Referenzthermometers berücksichtigt werden. Die verschiedenen Raten r, r' der Temperaturänderungen werden durch verschiedene Messungen mit unterschiedlicher Abkühlung und Erwärmung erzeugt. Hieraus wird die Temperaturkorrektur ermittelt.

In der Praxis hat sich jedoch herausgestellt, dass der Einsatz der Referenzmessfühler in nichtstationären Heizungszuständen, d.h. bei sich insbesondere rasch verändernden Vorlauftemperaturen bzw. Messwerten, wegen unterschiedlicher Ansprechgeschwindigkeiten der Mess- und Referenzfühler beispielsweise aufgrund verschiedener Wärmeankopplung oder verschiedener Materialien nicht immer möglich ist. Nichtstationäre Zustände ergeben sich in Heizungsregelungen jedoch vergleichsweise häufig, da die Vorlauftemperatur beispielsweise ständig an die Außentemperatur sowie gegebenenfalls den Gebäudewärmebedarf angepasst wird. Vor allem ergeben sich nicht stationäre Zustände aus der Taktung des Brenners und der Heizungsanlage und Stellbewegungen des Mischers.

Aufgabe der vorliegenden Erfindung ist es daher, eine genauere Ermittlung des Korrekturwertes $\Delta R$ zu erreichen.

Diese Aufgabe wird erfindungsgemäß mit den Merkmalen der Ansprüche 1 und 8 gelöst. Bei dem vorgeschlagenen Verfahren ist vorgesehen, dass insbesondere bei der Detektion bzw. Rekonstruktion der Kennlinie Messwertfolgen des Messfühlers und Messwertfolgen des Referenzmessfühlers in Phase zueinander gebracht werden. Dazu werden bei einer nicht stationären, d.h. sich zeitlich ändernden Messwertfolge des Referenzmessfühlers und/oder des Messfühlers, ein möglicher Zeitversatz bzw. Zeitverzug zwischen einer Messwertfolge des Messfühlers und einer Messwertfolge des Referenzmessfühlers ermittelt und korrigiert. Dadurch wird zumindest annähernd Phasengleichheit zwischen den nichtstationären Messwertfolgen der verschiedenen Fühler hergestellt, so dass auch diese Messwerte analog zu dem Fall stationärer, d.h. sich zeitlich nicht ändernder, Messwerte für die Vorlauftemperatur zur Ermittlung der Kennlinie eines a priori unbekannten Messfühlers verwendet werden können. Die rekonstruierte Kennlinie kann somit für eine phasenverzugskorrigierte Ausgabe eines dem aktuellen Wärmebedarf angepassten Widerstandswertes benutzt werden, beispielsweise indem die rekonstruierte Kennlinie verwendet wird, um aus dem Messwert des Messfühlers eine Vorlauftemperatur zu ermitteln. Diese Vorlauftemperatur wird dann um die Korrekturwertvorgabe (typischerweise auch in Form eines Vorlauftemperatur- bzw. Vorlauftemperaturkorrekturwertes) der Vorlauftemperaturregelung angepasst und anschließend mit der rekonstruierten Kennlinie wieder in einen an die Heizungsregelung ausgebbaren Regler- bzw Widerstandswert zurückgerechnet. In diesem Zusammenhang wird unter Kennlinie also sowohl die Kennlinie zur Ermittlung einer Temperatur aus einem Widerstandswert als auch deren Umkehrkennlinie zur Ermittlung eines Widerstandswertes aus der Temperatur bezeichnet. Letztere kann aus der erstgenannten Kennlinie ohne Weiteres abgeleitet werden.

Die Ermittlung eines Zeitversatzes der gemessenen Widerstandwerte kann erfindungsgemäß in einfacher Weise durch eine Kreuzkovarianz- bzw. Kreuzkorrelationsfunktion erfolgen. Erfindungsgemäß können im Falle stationärer Messwerte bzw. Signalverläufe die Messwerte natürlich unmittelbar und ohne Phasenkorrektur zur Detektion bzw. Rekonstruktion der Kennlinie und/oder zur Widerstandsausgabe herangezogen werden. Daher lässt sich das erfindungsgemäße Verfahren in einfacher Weise im Rahmen einer digitalen oder schaltungselektronischen Messwertfilterung umsetzen, die im Falle stationärer Messwerte bzw. Signalverläufe inaktiv bleibt und im Falle nichtstationärer Messwerte bzw. Signalverläufe den ermittelten Zeitversatz korrigiert. Diese Messwertfilterung wird nachfolgend auch als Dynamikfilter bezeichnet, da Messwertfolgen auf ihr dynamisches Verhalten hin gefiltert werden, wobei gegebenenfalls Korrekturen zur Herstellung der annähernden Phasengleichheit zwischen Messfühlerwert und Referenzmessfühlerwert durchgeführt werden.

Bei dem Einsatz einer Kreuzkovarianz- bzw. Kreuzkorrelationsfunktion der beiden Messwertfolgen lässt sich der Zeitversatz aus der Lage eines Extremums dieser Kreuzkovarianz- bzw. Kreuzkorrelationsfunktion ableiten, die typischer Weise eine Funktion der Abtastzeitpunkte ist, zu denen die Messwerte des Messfühlers und des Referenzmessfühlers gewonnen werden. Über die bekannte Abtastfrequenz lässt sich ein festgestellter Versatz dann in einen Zeitversatz umrechnen. Dies ist in der deutschen Patentanmeldung 10 2008 047 954.3 der Anmelderin ausführlich beschrieben und wird in der Figurenbeschreibung noch ausführlicher erläutert. Auch diese Erläuterung ist Gegenstand der vorliegenden Erfindung.

Aus den phasenkorrigierten Messwerten wird dann die Kennlinie des Messfühlers detektiert bzw. rekonstruiert, welche zur Berechnung des Korrekturwertes aus der Korrekturwertvorgabe herangezogen wird.

Aufgrund der üblichen Messunsicherheiten und der Begrenzung der Rechengenauigkeit ist diese Kennlinie, d.h. sowohl die Kennlinie

$$\vartheta_{Vorlauf} = f_{Fühler}(R_{Fühler})$$

als auch deren Umkehrkennlinie

$$R_{Fühler} = f_{Fühler}^{-1}(\vartheta_{Vorlauf})$$

fehlerbehaftet. Auch in dem interessierenden Wertebereich liegt der Fehler häufig bei mehr als 1 Kelvin und beeinträchtigt die Qualität der Wärmeadaptionsregelung. Der resultierende Temperaturfehler für den Korrekturwert liegt jedoch in einer Größenordnung von etwa 0,5 Kelvin bis 1 Kelvin. Daher soll erfindungsgemäß der Fehler des Korrekturwertes und damit auch des Reglerwertes weiter vermindert werden. Um für die Ermittlung der Vorlauftemperatur, d.h. den aktuellen Arbeitspunkt der Heizungsregelung aus dem Messwert des Messfühlers, und für die Ermittlung des um die Korrekturwertvorgabe korrigierten Korrekturwertes nicht gleichermaßen die detektierte bzw. rekonstruierte, jedoch fehlerbehaftete Kennlinie des Messfühlers zu verwenden, wird erfindungsgemäß bei der Berechnung des Korrekturwertes der in Phase mit dem Messwert des Messfühlers gebrachte, d.h. phasenkorrigierte, Messwert des Referenzmessfühlers sowie die bekannte Kennlinie des Referenzmessfühlers verwendet. Der Messwert des Messfühlers und die mit großer Genauigkeit beispielsweise aus einem Datenblatt bekannte Kennlinie des Referenzmessfühlers und die rekonstruierte Kennlinie des Messfühlers bzw. deren Umkehrkennlinie werden somit verwendet, um den Arbeitspunkt bzw. die Vorlauftemperatur genau zu bestimmen. Dadurch wird der Fehler bei der Bestimmung des Arbeitspunktes der Heizungsregelung, d.h. der aktuellen Vorlauftemperatur, deutlich verringert. Die detektierte Kennlinie des Messfühlers bzw. deren Umkehrlinie wird in diesem Zusammenhang nur verwendet, um aus dem korrigierten Vorlauftemperaturwert den benötigten Korrekturwert als Widerstandskorrekturwert zu bestimmen.

Gemäß einer besonders bevorzugten Ausführungsform der vorliegenden Erfindung erfolgen die Detektion bzw. Rekonstruktion der Kennlinie in einem Kennlinien-Zyklus, der durch den Zyklus der Phasenkorrektur, d. h. die Zykluszeit des Dynamikfilters, bestimmt ist, und die Berechnung des Korrekturwertes und/oder Reglerwertes in einem Vorlauftemperatur-Zyklus vorzugsweise iterativ. Dies bedeutet, dass die Rekonstruktion der Kennlinie und die Berechnung des Korrektur- bzw. Reglerwertes wiederholt in vorgegebenen zeitlichen Abständen erfolgen. Hierbei werden die jeweils neuen, aktuellen Messwerte sowohl des Messfühlers als auch des Referenzmessfühlers und die aktuelle Korrekturwertvorgabe berücksichtigt, so dass dynamische Änderungen des Systems automatisch berücksichtigt werden. In einer einfachen Ausgestaltung des System können beide Zyklen, d.h. der Kennlinien-Zyklus und der Vorlauftemperatur-Zyklus, gleich lang sein. Dies hat rechnungstechnisch den Vorteil, dass die aus der Kennliniendetektion ermittelten Parameter unmittelbar auch bei der Berechnung des Korrektur- bzw. Reglerwertes verwendet werden können und die Abarbeitung durch ein einziges Programm in einem Mikroprozessor ablaufen kann. So werden Hardware-Ressourcen gespart und eine besonders kostengünstige Umsetzung des Verfahrens erreicht.

Andererseits sind die für die Durchführung der Phasenkorrektur benötigten rechentechnischen Ressourcen wesentlich größer als bei der Berechnung des Korrektur- und/oder Reglerwertes. Dies liegt daran, dass für die Durchführung der Phasenkorrektur eine vergleichsweise große Anzahl von Messwerten des Messfühlers und Referenzmessfühlers gesammelt werden muss, die der Phasenkorrektur zugrunde zu legen sind. Hierdurch wird die Länge der Zykluszeit des Kennlinien-Zyklus maßgeblich festgelegt. Ferner benötigt die zur Ermittlung des Zeitverzugs notwendige Berechnung eine gewisse Rechenzeit. Die Ermittlung des Korrekturwertes kann - nach einmal ermittelter Kennlinie - unmittelbar für jeden Messwert des Messfühlers erfolgen und erfordert nur eine geringe Rechenzeit. Somit ist der Kennlinien-Zyklus typischerweise deutlich länger als der Vorlauftemperatur-Zyklus, dessen Aufgabe es ist, den meist als Widerstandswert gegebenen Reglerwert der ggf. schnellen Veränderung der Vorlauftemperatur zeitnah nachzuführen. Daher ist es vorteilhaft, dass die Zykluszeit des Kennlinien-Zyklus länger ist als die Zykluszeit des Vorlauftemperatur-Zyklus. Eine erfindungsgemäß sinnvolle zeitliche Relation zwischen dem Kennlinien-Zyklus und dem Vorlauftemperatur-Zyklus kann in einer Größenordnung zwischen $10^2$ und $10^3$ liegen. In einer konkreten Anwendung haben sich als sinnvolle Zeiten für den Kennlinien-Zyklus etwa 400 Sekunden und für den Vorlauftemperatur-Zyklus etwa 0,5 Sekunden ergeben. Werte in dieser Größenordnung erlauben eine sehr zeitnahe und damit genaue Ermittlung des Korrekturwertes, da auch in dynamischen Phasen der Heizungsregelung, d.h. mit einer beispielsweise durch die Heizungsregelung vorgegebenen Vorlauftemperaturänderung, der Korrekturwert schnell reagieren kann. Natürlich lässt sich das erfindungsgemäß vorgeschlagene Prinzip auch mit anderen Zykluszeiten und anderen Zykluszeit-Relationen umsetzen. So kann das Zykluszeit-Verhältnis auch umgekehrt sein, d.h. der Vorlauftemperatur-Zyklus kann länger sein als der Kennlinien-Zyklus.

Da in dem Vorlauftemperatur-Zyklus die Kennlinie zur Ermittlung der Temperatur aus dem Messwert eines Fühlers und deren Umkehrkennlinie zur Ermittlung des Korrektur- und/oder Messwertes (Widerstandswert) aus einem Temperaturwert vorliegen müssen, wird gemäß einer besonders bevorzugten Ausführungsform vorgeschlagen, dass die Parameter der detektierten Kennlinie, insbesondere der Umkehrkennlinie sowie gegebenenfalls auch der Kennlinie, die ineinander überführbar sind, aus dem längeren Kennlinien-Zyklus an den kürzeren Vorlauftemperatur-Zyklus übergeben werden, und zwar vorzugsweise immer dann, wenn im Rahmen des Kennlinien-Zyklus eine Aktualisierung der Parameter erfolgt ist. Diese Parameter werden dann in dem Vorlauftemperatur-Zyklus unmittelbar übernommen und zur Berechnung des Korrekturwertes und/oder des Reglerwertes verwendet.

Die erfindungsgemäß vorgeschlagene zeitliche Trennung der beiden Zyklen hat den Vorteil, dass die Berechnung des Korrekturwertes wesentlich schneller und zeitnäher erfolgen kann, als dies möglich wäre, wenn die Berechnung jeweils bei der - sich iterativ wiederholenden - Rekonstruktion der Kennlinie durchgeführt würde, für welche ein wesentlich größerer Zeitbedarf benötigt wird. Hierdurch lässt sich die Qualität und Genauigkeit des Korrekturwertes beziehungsweise des darauf basierenden Reglerwertes bereits erheblich verbessern.

Der Korrekturwert, welcher sich in Anwendung der Umkehrkennlinie aus der Summe der mit dem Referenzmessfühler gemessenen Vorlauftemperatur und der Korrekturwertvorgabe der Vorlauftemperaturregelung in Differenz zur Anwendung der Umkehrkennlinie auf die durch den Messfühler bestimmte Vorlauftemperatur ergibt, ist weder mit dem Fehler aus der Ermittlung der detektierten bzw. rekonstruierten Kennlinie behaftet, soweit diese die Bestimmung der Vorlauftemperatur selbst betrifft, noch mit dem Phasenfehler des Referenzmessfühlers. Dazu können die in Phase gebrachten Messwerte des Referenzmessfühlers und des Messfühlers analog zu den Parametern der Kennlinie und/oder der Umkehrkennlinie in einfacher Weise auch aus dem Kennlinien-Zyklus übermittelt werden, insbesondere soweit diese vorliegen oder aktualisiert werden. Da die Berechnung der (zu diesem Zeitpunkt gültigen) Phasenkorrektur im Rahmen der iterativ durchgeführten Kennlinienkorrektur jeweils sofort nach Eingang der Messwerte in dem Kennlinien-Zyklus durchgeführt wird, können diese phasenkorrigierten Werte auch zeitnah weitergegeben werden, so dass der Vorlauftemperatur-Zyklus auch in dieser Ausgestaltung erfindungsgemäß kürzer sein kann als der Kennlinien-Zyklus, ohne die Genauigkeit zu verschlechtern. Allerdings ist das ständige Übermitteln der phasenkorrigierten Messwerte aufwendig und zeitintensiv.

Zur Einsparung dieses Aufwands ist es daher sinnvoll, wenn die Parameter der Phasenkorrektur aus dem längeren Kennlinien-Zyklus an den kürzeren Vorlauftemperatur-Zyklus übergeben werden. Die Phasenkorrektur wird dann mit diesen Parametern für die Messwerte des Messfühlers und des Referenzmessfühlers durchgeführt, ohne dass die Parameter für die Phasenkorrektur noch einmal ermittelt werden müssten. Anschließend wird der phasenkorrigierte Referenzwert mittels der genau bekannten Kennlinie zur Ermittlung der Vorlauftemperatur verwendet, die dann als Eingangsgröße der Umkehrkennlinie dient. Die zweite Eingangsgröße der Umkehrkennlinie ist die als Vorlauftemperaturabweichung gegebene Korrekturwertvorgabe, so dass mit der Summe des phasenkorrigiert ermittelten Vorlauftemperaturwerts und der Korrekturwertvorgabe ein Korrekturwert ermittelt wird, der in Summe mit dem phasenkorrigierten Messwert des Messfühlers den an die Heizungsregelung ausgegebenen Reglerwert bildet.

Um zufällige Schwankungen zu minimieren und damit die mittlere Genauigkeit weiter zu verbessern, kann erfindungsgemäß vorgeschlagen werden, dass in dem Vorlauftemperatur-Zyklus eine gleitende zeitliche Mittelwertbildung der Messwerte, d. h. der Messwerte des Messfühlers und/oder des Referenzmessfühlers und/oder der Korrekturwertvorgaben aus der Vorlauftemperaturregelung, erfolgt. Die zeitliche Mittelwertbildung kann insbesondere für alle Eingangsgrößen des Vorlauftemperatur-Zyklus vorgenommen werden.

Ferner kann zur weiteren Verbesserung der Genauigkeit eine Optimierung der detektierten bzw. rekonstruierten Kennlinie durch Auswertung des phasenkorrigierten Messwertes des Messfühlers und der aktuellen, aus dem phasenkorrigierten Messwert des Referenzfühlers mit der bekannten Kennlinie berechneten Vorlauftemperatur erfolgen. Dies kann vorzugsweise innerhalb des Kennlinien-Zyklus vorgenommen werden, indem für jeden neuen Messwert ein Vergleich der mit der rekonstruierten Kennlinie aus dem Messwert des Messfühlers berechneten Vorlauftemperatur und der durch den Referenzmessfühler mit der bekannten, genaueren Kennlinie ermittelten Vorlauftemperatur erfolgt.

Die Erfindung bezieht sich ferner auf eine Vorrichtung gemäß Anspruch 8 zur Ermittlung eines Korrekturwertes, insbesondere einer Widerstandskorrektur, auf Basis des Messwertes eines Messfühlers und einer Korrekturwertvorgabe einer Vorlauftemperaturregelung, welche an eine Heizungsanlage mit einer Heizungsregelung zur Einstellung einer Vorlauftemperatur anschließbar ist. Die Komponenten der Vorrichtung sind vorzugsweise zur Durchführung des vorbeschriebenen Verfahrens eingerichtet. Gemäß Anspruch 10 weist die Vorrichtung eine Kennlinieneinrichtung zur Detektion bzw. Rekonstruktion der Kennlinie des Messfühlers auf, in der eine Messwertfolge eines Referenzmessfühlers und des Messfühlers erfasst und die einzelnen Messwerte des Messfühlers in Relation zu den Messwerten des Referenzmessfühlers mit bekannter Kennlinie gesetzt werden. Ferner ist eine Vorlauftemperatureinrichtung vorgesehen, welche mit der detektierten Kennlinie und der Korrekturwertvorgabe den Korrekturwert bestimmt, mit einem Messwert des an die Heizungsregelung anschließbaren Messfühlers zu einem Reglerwert zusammenfasst und einem Anschluss der Heizungsregelung für den Messfühler zuleitet, so dass die Heizungsregelung die Vorlauftemperatur unter Berücksichtigung des Temperaturwertes einstellt bzw. einstellen kann. Erfindungsgemäß ist die Kennlinieneinrichtung dazu eingerichtet, insbesondere bei der Detektion bzw. Rekonstruktion der Kennlinie die Messwertfolge des Messfühlers und die Messwertfolge des Referenzmessfühlers in Phase zueinander zu bringen. Ferner können die Vorrichtung beziehungsweise ihre Komponenten zur Durchführung einzelner Verfahrensschritte des vorbeschriebenen Verfahrens eingerichtet sein. Dazu können die Komponenten insbesondere eine entsprechend eingerichtete Computereinrichtung, beispielsweise einen oder mehrere Mikroprozessoren, aufweisen, die mit entsprechender Software zur Durchführung der Verfahrensschritte eingerichtet ist. Ferner können entsprechende Anschlüsse zum Anschließen der Fühler und der Vorlauftemperaturregelung vorgesehen sein.

Bei der erfindungsgemäßen Vorrichtung ist die Vorlauftemperatureinrichtung dazu eingerichtet, bei der Berechnung des Korrekturwertes den in Phase gebrachten Messwert des Referenzmessfühlers sowie die bekannte Kennlinie des Referenzmessfühlers und die detektierte Kennlinie beziehungsweise deren Umkehrkennlinie zu verwenden.

Weitere Vorteile, Merkmale und Anwendungsmöglichkeiten der vorliegenden Erfindung ergeben sich auch aus der nachfolgenden Beschreibung von Ausführungsbeispielen und der Zeichen.

Es zeigen:

Fig. 1 ein Vergleich der - in der Praxis nicht bekannten - Original-Kennlinie des Messfühlers mit einer rekonstruierten Kennlinie ohne Berücksichtigung der Phasendifferenz zwischen den Messwerten des Messfühlers und des Referenzmessfühlers sowie ohne Optimierung des Arbeits- punktes und mit einer unter Anwendung einer Phasenkorrektur und ei- ner Arbeitspunktoptimierung rekonstruierten Kennlinie;

Fig. 2 einen Signalflussplan für die Durchführung des erfindungsgemäßen Verfahrens gemäß einer ersten Ausführungsform;

Fig.3 einen Signalflussplan für die Durchführung des Verfahrens gemäß einer nicht zur Erfindung gehörenden Ausführungsform und

Fig. 4 einen Signalflussplan für die Durchführung des erfindungsgemäßen Verfahrens gemäß einer weiteren Ausführungsform.

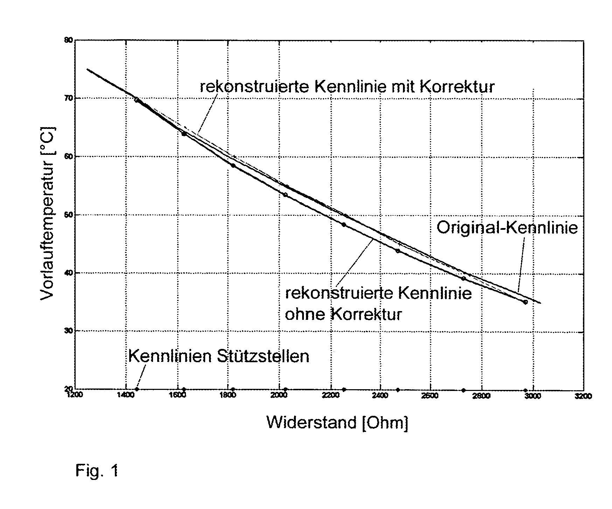

In dem Graphen gemäß Fig. 1 ist die Original-Kennlinie eines Messfühlers dargestellt, die in der Praxis nicht bekannt ist und detektiert beziehungsweise rekonstruiert werden soll.

Dazu wird ein Referenzmessfühler 4 verwendet, welcher dieselbe Vorlauftemperatur $\vartheta_{vorlauf}$ misst wie der Messfühler 2 mit der unbekannten Kennlinie $f_{Fühler}(R)$, wobei die Kennlinie $f_{REF}(R)$ des Referenzmessfühlers 4 natürlich bekannt ist. Indem die Messwerte $R_{REF}$ des Referenzmessfühlers 4 mit bekannter Kennlinie, d.h. die daraus ermittelten Temperaturwerte, mit den Messwerten $R_{Fühler}$ des Messfühlers 2 in Relation gesetzt werden, kann die Kennlinie $f_{Fühler}(R)$ rekonstruiert werden.

Ohne jegliche Korrekturen liegt die rekonstruierte Kennlinie $f_{Fühler}(R)$ (mit den in der Darstellung runden Stützstellenpunkten) nicht genau auf der Original-Kennlinie $f_{Fühler}(R)$. Gründe hierfür sind insbesondere eine gewisse Phasendifferenz bei der Messwerterhebung zwischen dem Messfühler und dem Referenzmessfühler, die beispielsweise durch eine unterschiedlich gute Wärmeankopplung entstehen können. Die Kennlinie mit den kreuzförmigen Stützpunkten basiert auf einer Rekonstruktion, bei der die Messwerte des Messfühlers 2 und des Referenzmessfühlers 4 gemäß einem der nachfolgend beschriebenen Verfahren in Phase zueinander gebracht wurden. Ferner wurde eine Optimierung bei der Bestimmung des Arbeitspunktes durchgeführt, indem die aus den Messwerten $R_{REF}$ und der bekannten Kennlinie $f_{REF}(R)$ gewonnenen Vorlauftemperaturwerte zur Berechnung der rekonstruierten Kennlinie verwendet wurden.

Wie Fig. 1 zu entnehmen, ist es daher im Rahmen einer Vorlauftemperaturadaptionsregelung, welche Korrekturwerte $\Delta R$ auf den Messwert $R_{Fühler}$ des Messfühlers 2 aufschaltet und diesen so erzeugten Reglerwert $R_{Regler}$ einer Vorlauftemperaturregelung zuführt, sinnvoll, eine entsprechende Korrektur der rekonstruierten Kennlinie $f_{Fühler}(R)$ vorzunehmen, um die Vorgaben der Vorlauftemperaturregelung genau umzusetzen und damit die erwünschte Energieeinsparung unter Beibehaltung des Regelungskomforts zu ermöglichen.

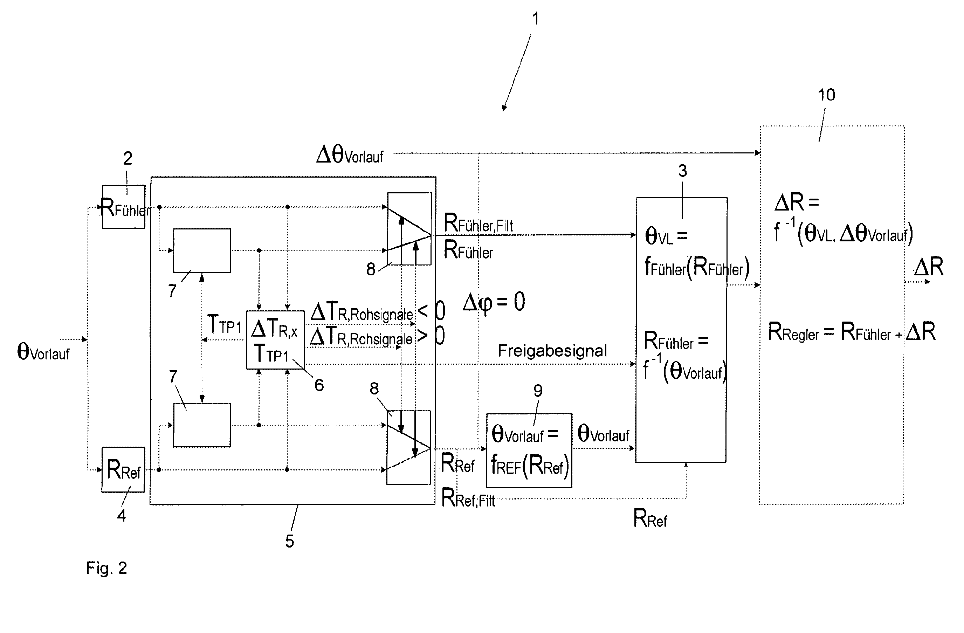

Ein erfindungsgemäß durchführbares Verfahren wird nachfolgend anhand von Fig. 2 beschrieben.

Fig. 2 stellt schematisch eine Vorrichtung 1 zur Ermittlung eines Korrekturwertes einschließlich Detektion beziehungsweise Konstruktion der Kennlinie $f_{Fühler}$ (R) eines Messfühlers 2 dar. Der Messfühler 2 misst die Vorlauftemperatur $\vartheta_{vorlauf}$ einer Heizungsanlage und gibt den Messwert $R_{Fühler}$ als der gemessenen Vorlauftemperatur $\vartheta_{Vorlauf}$ entsprechenden Widerstandwert aus.

Um für eine Wärmeadaptionsregelung einer Heizungsanlage diesen Messwert $R_{Fühler}$ in einem Vorlauftemperaturwert $\vartheta_{Vorlauf}$ zu übersetzen bzw. diesen Messwert $R_{Fühler}$ mit einem Korrekturwert $\Delta R$ zu beaufschlagen, muss die a priori unbekannte Kennlinie $f_{Fühler}$ (R) detektiert bzw. rekonstruiert oder ermittelt werden. Hierfür weist die Vorrichtung 1 ein Kennlinienmodul 3 zur Kennliniendetektion bzw. -rekonstruktion auf, dem neben dem Messwert $R_{Fühler}$ auch der durch einen Referenzmessfühler 4 erfassten Messwert $R_{REF}$ derselben Vorlauftemperatur $\vartheta_{Vorlauf}$ zugeführt wird. Da die Kennlinie $f_{REF}(R)$ des Referenzmessfühlers 4 bekannt ist, kann das Kennlinienmodul 3 den Messwert $R_{Fühler}$ in Relation zu dem dem Messwert $R_{REF}$ entsprechenden Vorlauftemperaturwert $\vartheta_{Vorlauf}$ setzen, um daraus die Widerstand-Temperaturkennlinie $f_{Fühler}(R)$ zu ermitteln. Dazu werden in dem Kennlinienmodul 3 nicht nur einzelne Messwerte $R_{Fühler}$, $R_{REF}$ erfasst, sondern Messwertfolgen der mit der Abtastfrequenz abgetasteten Messfühler 2, 4. Diese Variante ist in Fig. 2 gestrichelt dargestellt.

Es ist, wie in Fig. 1 als Variante mit durchgezogenem Strich dargestellt, grundsätzlich auch ausreichend, wenn das Kennlinienmodul 3 nur die durch den Referenzmessfühler gemessene Vorlauftemperatur $\vartheta_{Vorlauf}$ übermittelt bekommt. Statt die Auswertung der bekannten Kennlinie $f_{REF}(R)$ in das Kennlinienmodul 3 zu integrieren, ist es daher auch möglich, dem Kennlinienmodul 3 ein Temperaturbestimmungsmodul 9 vorzuordnen, das unter Verwendung der genau bekannten Kennlinie $f_{REF}(R)$ des Referenzmessfühlers 4 aus dem zugeleiteten Widerstandswert $R_{REF}$ die Vorlauftemperatur $\vartheta_{Vorlauf}$ bestimmt und an das Kennlinienmodul 3 ausgibt.

Bei nicht stationären Messwertfolgen, d.h. einen Zustand der Heizungsanlage, in welchem sich die Vorlauftemperatur $\vartheta_{Vorlauf}$ kurzfristig mit der Zeit ändert, kann es aufgrund eines unterschiedlichen Zeitverhaltens und/oder Wärmeübergangs an der Messstelle des Messfühlers 2 und des Referenzmessfühlers 4 zu einem Zeitversatz $\Delta T_R$ der Messwertfolgen des Messfühlers 2 und des Referenzmessfühlers 4 kommen. Unkorrigiert würde dies dazu führen, dass das Kennlinienmodul 3 falsche Messwerte $R_{Fühler}$ und $R_{REF}$ (bzw. $\vartheta_{Vorlauf, REF}$) zur Ermittlung der Kennlinie $f_{Fühler}(\vartheta)$ miteinander kombiniert.

Um dies zu vermeiden, ist dem Kennlinienmodul 3 ein Dynamikfilter 5 vorgeschaltet, welcher den Zeitversatz $\Delta T_R$ zwischen einer Messwertfolge des Messfühlers 2 und einer Messwertfolge des Referenzmessfühlers 4 ermittelt und korrigiert, d.h. die Phasenverschiebung zwischen den Messwertfolgen durch Korrektur der Messwertfolgen beseitigt.

Das dazu vorgeschlagene Verfahren ist schematisch innerhalb des den Dynamikfilter 5 darstellenden Kastens wiedergegeben.

Die am Beispiel einer Vorlauftemperatur $\vartheta_{Vorlauf}$ an einem Heizkessel nachfolgend detailliert beschriebene Kennliniendetektion umfasst die Rekonstruktion bzw. Detektion einer a priori unbekannten Widerstandskennlinie $f_{Fühler}(R)$ eines an dem Heizkessel der Heizungsanlage angebrachten Messfühlers 2, der einen der im Bereich des Messfühlers 2 herrschenden Vorlauftemperatur $\vartheta_{Vorlauf}$ entsprechenden Widerstandwert $R_{Fühler}$ misst und mit einem Widerstandswert $R_{REF}$ eines Referenzmessfühlers 4 vergleicht, welcher auch die Vorlauftemperatur $\vartheta_{Vorlauf}$ zur gleichen Zeit und an einem nahegelegenen, de facto dem gleichen, Messort erfasst. Die Kennliniendetektion erfordert entweder stationäre Verhältnisse der gemessenen Widerstandswerte $R_{Fühler}$ und $R_{REF}$ des Messfühlers 2 und des Referenzmessfühlers 4 oder annähernde Phasengleichheit der Messfolgen der Widerstandwerte.

Ziel des Dynamikfilters 5 ist es zunächst, festzustellen, ob ein stationärer Zustand oder eine annähernde Phasengleichheit zwischen den Messwerten des Messfühlers 2 und des Referenzmessfühlers 4 herrscht. In diesem Fall werden die Messwerte nicht beeinflusst und an das Kennlinienmodul 3 weitergeleitet. Im Falle einer nicht stationären Messwertfolge und eines Phasenunterschieds zwischen den Messwertfolgen des Messfühlers 2 und Referenzmessfühlers 4 soll eine Phasengleichheit der Messwertfolgen in annähernder Weise erreicht werden. Sofern eine Korrektur erfolgreich oder nicht erforderlich war, gibt der Dynamikfilter 5 die Kennliniendetektion durch ein Freigabesignal an das Kennlinienmodul 3 frei und schaltet die ggf. phasenkorrigierten Messwerte auf das Kennlinienmodul 3 auf.

In einem ersten Verfahrensschritt erfasst dazu ein Zeitmodul 6 des Dynamikfilters 5 zur Ermittlung des Zeitversatzes $\Delta T_{R,Rohsignale}$ zwischen dem Referenzmessfühler 4 und dem Messfühler 2 die unkorrigierten Widerstandwerte $R_{REF}$ und $R_{Fühler}$. Aus diesen Messwerten wird anschließend entweder ein annähernd stationärer Signalzustand detektiert oder der vorzeichenbehaftete Zeitverzug bzw. Zeitversatz der unkorrigierten Messwertfolgen ermittelt. In vorgeschlagenem Beispiel erfolgt dies durch eine Kovarianzberechnung.

Falls kein stationärer Signalzustand erkannt wurde, wird aus dem Zeitversatz $\Delta T_{R,Rohsignale}$ der unkorrigierten Messwertfolgen eine erste Schätzung für eine Zeitkonstante $T_{PT1}$ eines Filtermoduls 7 als Korrekturgröße gebildet, die auf die Widerstandswerte $R_{Fühler}$, $R_{REF}$ der Messwertfolgen mit dem Ziel einwirkt, die Widerstandswerte der vorauseilenden (schnelleren) Messwertfolge zu verlangsamen.

Sobald der erste Schätzwert für die Zeitkonstante $T_{PT1}$ vorliegt, wird das Filtermodul 7 für die Widerstandswerte der vorauseilenden Messwertfolge des Referenzmessfühlers 4 oder des Messfühlers 2 aktiviert. Dadurch liegen zumindest die Messwerte der ursprünglich vorauseilenden Messwertfolge auch als korrigierte Messwerte bzw. Filterwerte $R_{Filt}$ vor. Da das Filtermodul 7 die Zeitkonstante $T_{PT1}$ nun auf jeden Messwert des Messfühlers 2 und/oder des Referenzmessfühlers 4 anwendet, wird von einer Filterung der Messwerte $R_{Fühler}$, $R_{REF}$ gesprochen. In dem Dynamikfilter 5 liegen neben einem korrigierten Messwert $R_{Filt}$ für den Messwert $R_{Fühler}$ des Messfühlers 2 und/oder den Messwert $R_{REF}$ des Referenzmessfühlers 4 in jedem Fall auch die unkorrigierten Messwerte $R_{Fühler}$ und $R_{REF}$ zur Erfassung durch das Zeitmodul 6 vor.

In dem nächsten Verfahrensschritt prüft das Zeitmodul 6 nach Anwendung der in dem vorhergehenden Zyklus ermittelten Zeitkonstanten $T_{PT1}$, ob inzwischen ein annähernd phasengleicher Zustand für die korrigierten Messwertfolgen vorliegt. Falls nicht, ermittelt es nun mittels Kovarianzberechnung oder anderer geeigneter mathematischer Verfahren den vorzeichenbehafteten Zeitversatz $\Delta T_{R.Filt}$, nun zwischen dem unkorrigierten Widerstandswert der nacheilenden (langsameren) Messwertfolge und dem korrigierten, mit der Zeitkonstante $T_{PT1}$ verzögerten Widerstandswert der vorauseilenden (schnelleren) Messwertfolge. Wird ein weiterer Zeitversatz $\Delta T_{R,Filt}$ der bereits filterkorrigierten Messwertfolgen festgestellt, bedeutet dies, dass die Zeitkonstante $T_{PT1}$ noch nicht geeignet ist, eine Phasengleichheit der Messwertfolgen herzustellen. Daher wird die Zeitkonstante $T_{PT1}$ des Filtermoduls 7 iterativ nachgeführt, beispielsweise durch eine Korrektur $T_{PT1,neu}$ $=T_{PT1.alt} + \Delta T_{PT1}$, wobei $\Delta T_{PT1}$ auf der Basis des weiteren Zeitversatzes $\Delta T_{R,Filt}$ bestimmt wird.

Diese iterative Nachführung wird zyklisch mit einer Zykluszeit des Dynamikfilters 5 durchgeführt, die ein ganzzeiliges Vielfaches der Tastzeit des Dynamikfilters 5 ist, mit der das Zeitmodul 6 die korrigierten und gegebenenfalls auch die unkorrigierten Messwerte abtastet und den Zeitversatz $\Delta T_R$ ermittelt. In den Zyklen des Dynamikfilters 5, die nachfolgend auch als Kennlinien-Zyklen bezeichnet werden, erfolgt also eine iterative Nachführung der Zeitkonstante $T_{PT1}$ des Filters 7, mit dessen Hilfe der unkorrigierte Messwert $R_{Fühler}$ oder $R_{REF}$ der vorauseilenden Messwertfolge des Messfühlers 2 oder des Referenzmessfühlers 4 solange verzögert wird, bis der Zeitversatz $\Delta T_{R,Filt}$ kleiner als ein vorgegebener Grenzwert ist, d. h. annähernd Phasengleichheit vorliegt.

Die annähernd phasengleichen Messwertsignale $R_{Fühler}$, $R_{REF,Filt}$ bzw. $R_{REF}$, $R_{Fühler,Filt}$ werden dann dem Kennlinienmodul 3 gegebenenfalls unter Zwischenschaltung des Temperaturbestimmungsmoduls 9 zusammen mit einem Freigabesignal zugeführt, so dass das Kennlinienmodul 3 aufgrund der zugeführten Messwerte des Messfühlers 2 und des Referenzmessfühlers 4 die Detektion der Kennlinie $f_{Fühler}(R)$ durchführen kann.

Als Ergebnis gibt das Kennlinienmodul 3 den Widerstandswert $R_{Fühler}$ als Funktion der Vorlauftemperatur $\vartheta_{Vorlauf}$ aus. Das Temperaturbestimmungsmodul 9 arbeitet mit der bekannten Kennlinie $f_{REF}(R)$ des Referenzmessfühlers 4.

Zur Auswahl des geeigneten Messwertpaares ist in dem Dynamikfilter 5 ein Auswahlmodul 8 vorgesehen, das ausgehend von dem Vorzeichen des Zeitversatzes $\Delta T_{R,Rohsignale}$ der unkorrigierten Messwertfolgen die geeigneten Messwertpaare von korrigiertem und unkorrigiertem Messwert zur Ausgabe an das Kennlinienmodul 3 auswählt.

Die zuvor erwähnte Kovarianzberechnung in jedem Kennlinien-Zyklus des Dynamikfilters 5 kann durch eine Berechnung einer Kovarianzfunktion erfolgen, die sowohl für die ungefilterten (unkorrigierten) als auch die gefilterten (korrigierten) Widerstandswertepaare $R_{Fühler}$, $R_{REF}$ bzw. $R_{Fühler,Filt}$, $R_{REF,Filt}$, vorgenommen wird, wobei im Falle eines gefilterten Widerstandswert die Kreuzkovarianzfunktion R mit den verzögerten (korrigierten) Signalen des einen und den nicht verzögerten (unkorrigierten) Signalen des anderen berechnet wird.

Die Umsetzung dieses Vorschlags sowie weiterer Methoden zur Kovarianzberechnung beziehungsweise zur Bestimmung des Phasenverzugs zwischen zwei Messwertfolgen sind dem Fachmann bekannt, so dass hierauf nicht näher eingegangen werden muss. Eine Beschreibung hierzu findet sich auch in der deutschen Patentanmeldung 10 2008 047 954.3 der Anmelderin.

Nach Ermittlung der Kennlinie $f_{Fühler}(R)$ ist es durch das Kennlinienmodul 3 möglich, den Widerstandswert $R_{Fühler}$ des Messfühlers 2 als Funktion einer Vorlauftemperatur $\vartheta_{Vorlauf}$ auszugeben, wobei hierfür die Umkehrkennlinie $f^{1}(\vartheta)$ verwendet wird. Die Parameter der Umkehrkennlinie $f_{Fühler}^{-1}(\vartheta)$ werden dann einem Korrekturmodul 10 zur Ermittlung des Korrekturwertes $\Delta R$ zugeführt. Als weitere Eingangsgröße erhält das Korrekturmodul 10 den Messwert des Messfühlers $R_{Fühler}$, wobei in einer durch die Erfindung nicht erfassten Ausführungsform zunächst aus dem Messwert $R_{Fühler}$ des Messfühlers 2 die Arbeitspunkt-Vorlauftemperatur $\hat{\vartheta}_{VL}$ durch Anwendung der ermittelten Kennlinie $f_{Fühler}(\vartheta)$ auf den Messwert $R_{Fühler}$ des Messfühlers 2 abgeschätzt wird. Erfindungsgemäß wird die Arbeitspunkt-Vorlauftemperatur $\tilde{\vartheta}_{VL}$ aus dem Messwert $R_{REF}$ des Referenzmessfühlers 4 und der bekannten Kennlinie $f_{REF}(R)$ des Referenzmessfühlers 4 ermittelt.

Anschließend wird die Korrekturwertvorgabe $\Delta\vartheta_{Vorlauf}$ zu dieser geschätzten bzw. erfindungsgemäß ermittelten Arbeitspunkt-Vorlauftemperatur $\hat{\vartheta}_{VL}$ hinzuaddiert und auf die gebildete Summe die Umkehrkennlinie $f^{1}(\vartheta)$ angewendet. Durch die Differenz $f^{1}(\hat{\vartheta}_{VL} + \Delta\vartheta_{Vorlauf})$-$f^{1}(\hat{\vartheta}_{VL})$ ergibt sich dann der Korrekturwert $\Delta R$, der auf der abgeschätzten Arbeitspunkt-Vorlauftemperatur $\hat{\vartheta}_{VL}$ basiert.

Gemäß der in Fig. 2 dargestellten Lösung wird dieser Korrekturwert $\Delta R$ jeweils im Anschluss an die Bestimmung bzw. ihre iterative Nachführung der Kennlinie $f_{Fühler}(\vartheta)$ ausgerechnet, so dass der Korrekturwert $\Delta R$ jeweils nach Abschluss eines Kennlinien-Zyklus mitbestimmt wird.

Dieser Zyklus dauert jedoch vergleichsweise lange, da für die zuvor beschriebene Ermittlung der Kennlinien $f_{Fühler}(R)$, $f^{1}(\vartheta)$ jeweils Messwertfolgen für die Messwerte des Messfühlers und des Referenzmessfühlers $R_{Fühler}$, $R_{REF}$ vorliegen müssen, die anschließend einer rechnerisch aufwendigen - und daher mit derzeit üblichen Mikroprozessoren länger dauernden - Kovarianzberechnung unterzogen werden müssen. Damit liegen die so ermittelten Korrekturwerte $\Delta R$ nur vergleichsweise selten vor, was bei einem stark dynamischen Verhalten der Heizungsanlage zu durchaus spürbaren Ungenauigkeiten und Einbußen im Komfort oder einem energieverschwendenden Wärmeüberangebot führen kann.

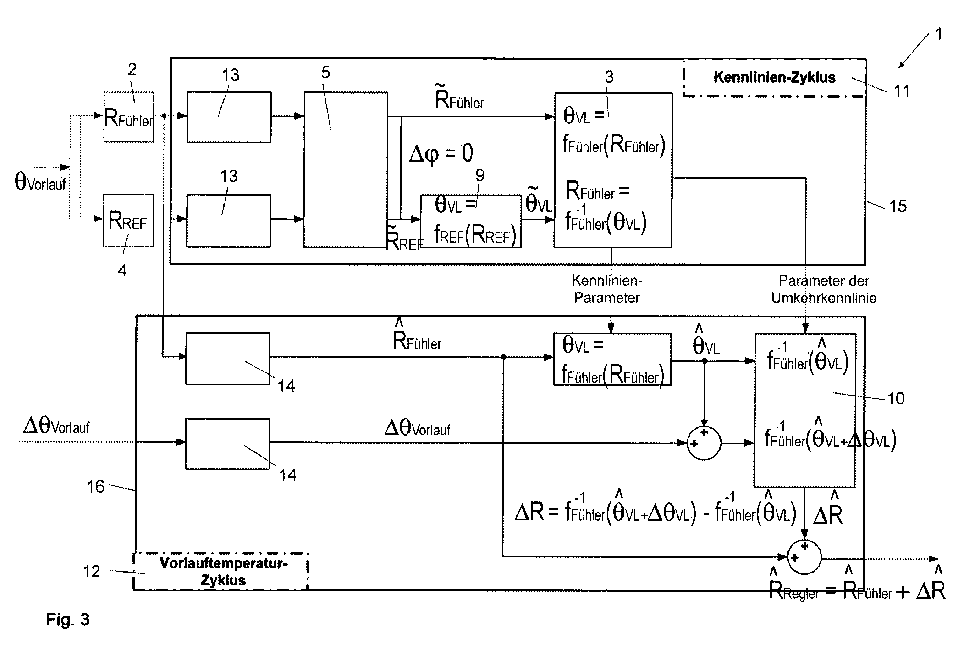

Bei einer weiteren, in Fig. 3 dargestellten Verfahrensvariante wird diese Problematik vermieden, indem die Detektion der Kennlinie $f_{Fühler}(R)$ und die Bestimmung des Korrekturwertes $\Delta R$ in zwei voneinander verschiedenen Verfahrenszyklen, nämlich dem Kennlinien-Zyklus 11 zur Ermittlung der Kennlinie $f_{Fühler}(R)$ des Messfühlers 2 und einen Vorlauftemperatur-Zyklus 12 zur Ermittlung des Korrekturwertes $\Delta R$ und des Reglerwertes $R_{Regler}$. Durch die Aufteilung dieser beiden Zyklen kann die Geschwindigkeit, mit der die beiden Zyklen in der erfindungsgemäßen Vorrichtung 1 ablaufen, deutlich unterschiedlich gestaltet werden. Der Kennlinien-Zyklus 11 gibt nach seinem erstmaligen Durchlauf die Parameter der Kennlinie $f_{Fühler}(R)$ sowie der Umkehrkennlinie $f^{1}(\vartheta)$ an den Vorlauftemperatur-Zyklus 12 weiter. Im weiteren Verfahrensablauf erfolgt eine Korrektur dieser Parameter-Daten im Rahmen der zyklischen Wiederholung des Kennlinien-Zyklus 11, insbesondere immer dann, wenn sich die Kennlinienparameter ändern.

Der Ablauf des Kennlinien-Zyklus 11 entspricht dem im Bezug auf Fig. 2 ausführlich beschriebenen Vorgehen, so dass auf eine erneute Beschreibung verzichtet wird und insoweit dieselben Bezugszeichen verwendet werden. Lediglich am Eingang des Kennlinien-Zyklus 11 sind zusätzlich Puffermodule 13 vorgesehen, welche die Messwerte $R_{Fühler}$ und $R_{REF}$ im Sinne eines sogenannten "FILO-Puffers" (First In Last Out) behandeln, welcher die Messwerte für die weitere Bearbeitung durch den Dynamikfilter 5 zwischenspeichert und gleichzeitig durch gleitende Mittelwertbildung eine Glättung vorsieht.

Die Abtastung der Vorlauftemperatur $\vartheta_{Vorlauf}$ mit dem Messfühler 2 und dem Referenzmessfühler 4 erfolgt dabei mit einer Taktung, die dem wesentlich schnelleren Vorlauftemperatur-Zyklus 12 entspricht und bei etwa 0,5 Sekunden liegt. Typische Zykluswerte für den Kennlinien-Zyklus 11 liegen dagegen bei etwa 400 Sekunden. Die Erfindung ist jedoch nicht auf die angegebenen Zykluszeiten beschränkt, die an die jeweiligen

In dem Vorlauftemperatur-Zyklus 12 wird der abgetastete Wert $R_{Fühler}$ einem Glättungsmodul 14 zugeführt, das eine gleitende Mittelwertbildung des Fühlerwertes $R_{Fühler}$ durchführt. Mit den aus den Kennlinien-Zyklus 11 erhaltenen Parametern für die Kennlinie $f_{Fühler}(R)$ des Messfühlers 2 wird der Messwert $R_{Fühler}$ in eine Arbeitspunkt-Vorlauftemperatur $\hat{\vartheta}_{VL}$ umgerechnet, die auf Basis der ermittelten Kennlinie eine Schätzung der Arbeitspunkt-Vorlauftemperatur $\vartheta_{Vorlauf}$ darstellt.

Eine weitere Eingabegröße des Vorlauftemperatur-Zyklus 12 stellt die Korrekturwertvorgabe $\Delta\vartheta_{Vorlauf}$ der übergeordneten Vorlauftemperaturregelung dar, die ebenfalls in einem Glättungsmodul 14 einer gleitenden Mittelwertbildung unterworfen wird und zu der abgeschätzten Arbeitspunkt-Vorlauftemperatur $\hat{\vartheta}_{VL}$ hinzuaddiert wird. Die beiden Eingangsgrößen $\hat{\vartheta}_{VL}$ und $\hat{\vartheta}_{VL} + \Delta\vartheta_{Vorlauf}$ werden dem Korrekturmodul 10 zugeführt, das in der bereits bekannten Weise hieraus den Korrekturwert $\Delta\hat{R}$ berechnet. Durch eine Summenbildung des Messwertes $R_{Fühler}$ mit dem Korrekturwert $\Delta\hat{R}$ wird der Reglerwert $R_{Regler}$ erhalten, welcher der Heizungsregelung zugeleitet wird.

Der Kennlinien-Zyklus 11 läuft dabei in einer Kennlinieneinrichtung 15 ab, die bspw. einen mittels geeigneter Software entsprechend eingerichteten Mikroprozessor aufweist. In ähnlicher Weise läuft der Vorlauftemperaturzyklus 12 in einer Vorlauftemperatureinrichtung 16 ab, die bspw. einen mittels geeigneter Software entsprechend eingerichteten Mikroprozessor aufweist. Insgesamt können für die Durchführung der Verfahrensschritte zwei Mikroprozessoren vorgesehen sein. Es ist jedoch auch möglich, sämtliche Verfahrensschritte des Kennlinien-Zyklus 11 und des Vorlauftemperatur-Zyklus 12 in einen Mikroprozessor zu integrieren, der in der vorgegebenen Zykluszeit jeweils den Vorlauftemperatur-Zyklus 12 und in den freien Rechenzeiten den Kennlinien-Zyklus 11 ausführt. Die Ausführung des Kennlinien-Zyklus 11 wird dann jeweils für den Vorlauftemperatur-Zyklus 12 unterbrochen.

Dieses in Fig. 3 dargestellte, nicht zum Gegenstand der Erfindung gehörende Vorgehen hat den Vorteil, dass der Korrekturwert $\Delta R$ beziehungsweise der Reglerwert $R_{Regler}$ mit einer sehr hohen Frequenz bestimmt werden kann, welche die der Ermittlung der Fühlerkennlinie $f_{Fühler}(R)$ um Größenordnungen übersteigt. Hierdurch wird die Genauigkeit insgesamt verbessert. Hinzu kommt, dass bei dieser Variante mögliche Phasenabweichungen bei der Bestimmung des Reglerwertes $R_{Regler}$ keine Rolle spielen, da sämtliche Größen von dem Messwert $R_{Fühler}$ des Messfühlers 2 abgeleitet werden.

Nachteilig hierbei ist jedoch, dass damit die Abschätzung der Arbeitspunkt-Vorlauftemperatur $\hat{\vartheta}_{VL}$ fehlerbehaftet ist in dem Maße, in welchem sie die erlernte beziehungsweise rekonstruierte Kennlinie $f_{Fühler}(R)$ Fehler beinhaltet. Zur Kenntlichmachung, dass die rekonstruierten Werte auf einer fehlerbehafteten Abschätzung des Arbeitspunkts, d.h. der aktuellen Vorlauftemperatur $\vartheta_{Vorlauf}$ beruhen, wurden die entsprechenden Variablen in Fig. 3 mit einem "^" versehen.

Im Vergleich zu der tatsächlichen, in der Praxis aber nicht bekannten Kennlinie $f_{Fühler}(R)$ hat sich herausgestellt, dass diese Fehler durchaus im Bereich > 1 Kelvin liegen.

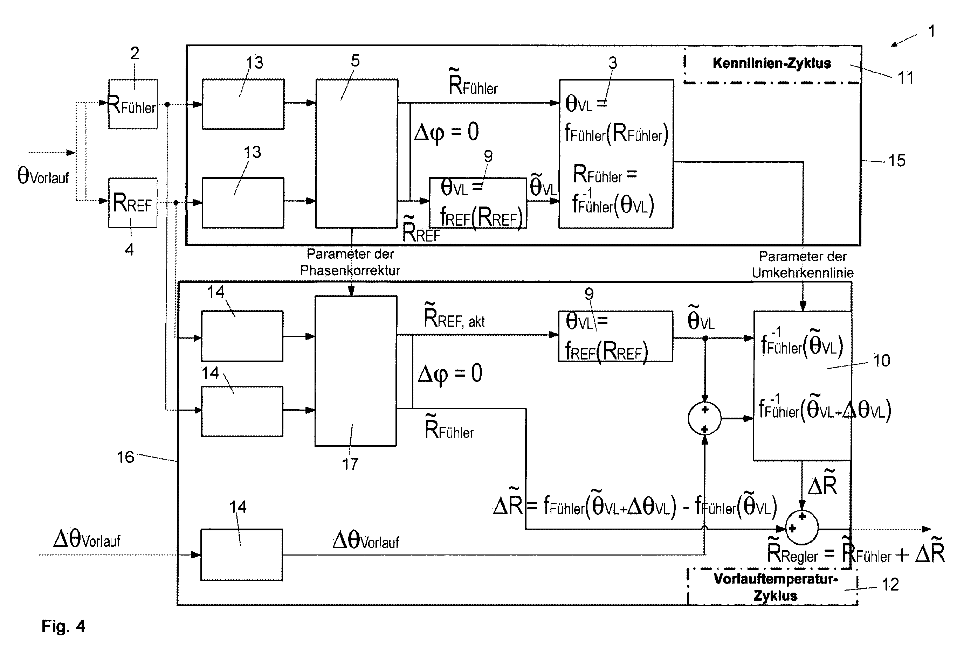

Um diesen Fehler zu vermeiden wird gemäß einer weiteren Ausführungsform der Erfindung, die nachfolgend in Bezug auf Fig. 4 beschrieben wird, vorgeschlagen, den Arbeitspunkt nicht unter Verwendung des Messwerts $R_{Fühler}$ des Messfühlers 2 und der rekonstruierten Kennlinie $f_{Fühler}(R)$ zu ermitteln, sondern aus der wesentlich genauer bekannten Kennlinie $f_{REF}(R)$ des Referenzmessfühlers 4.

Dabei ist der Kennlinien-Zyklus 11 der Vorrichtung 1 identisch zu der vorbeschriebenen Ausführungsform gemäß Fig. 3. Auch der Verfahrenablauf in dem Vorlauftemperatur-Zyklus 12 ist weitestgehend identisch, so dass auf die vorstehende Beschreibung verwiesen wird und nachfolgend nur noch wesentliche Unterschiede erläutert werden.

Im Gegensatz zu der in Fig. 3 beschriebenen Verfahrensvariante wird in Fig. 4 in einem dem Korrekturmodul vorgelagerten Temperaturbestimmungsmodul 9 als Kennlinie zur Bestimmung der Temperatur aus einem Messwert die genau bekannte Kennlinie $f_{REF}(R)$ des Referenzmessfühlers 4 verwendet. Entsprechend wird als Eingangsgröße dem Temperaturbestimmungsmodul 9 der Messwert $R_{REF}$ des Referenzmessfühlers 4 zugeleitet, der von dem Vorlauftemperatur-Zyklus 12 zusätzlich an dem Referenzmessfühler 4 abgegriffen und analog zu dem Messwert $R_{Fühler}$ des Messfühlers 2 in dem Glättungsmodul 14 einer gleitenden Mittelwertbildung unterworfen wird.

Mit diesem Messwert $R_{REF}$ des Referenzmessfühlers 4 ist es also möglich, den aktuellen Arbeitspunkt, d.h. die Vorlauftemperatur $\vartheta_{Vorlauf}$, der Heizungsanlage mit großer Genauigkeit zu bestimmen, da die verwendete Kennlinie $f_{REF}(R)$ keinen signifikanten Fehler aus der Detektion bzw. Rekonstruktion der Kennlinie aufweist. Um in Fig. 4 zu verdeutlichen, dass die Bestimmung des Arbeitspunkts auf einer genauen Messung und nicht auf einer Abschätzung unter Verwendung der rekonstruierten Kennlinie $f_{Fühler}(R)$ beruht, sind die entsprechenden Größen mit einer "~" gekennzeichnet.

Unter Verwendung der gemessenen Vorlauftemperatur $\tilde{\vartheta}_{VL}$ und der Korrekturwertvorgabe $\Delta\vartheta_{Vorlauf}$ berechnet das Korrekturmodul 10 wie zuvor bereits beschrieben den Korrekturwert $\Delta R$, der anschließend zu dem Messwert $R_{Fühler}$ des Messfühlers 2 addiert wird, um den an die Heizungsregelung ausgegeben Reglerwert $R_{Regler}$ zu bilden.

Hierbei kann es vorkommen, dass die Messwerte $R_{REF}$, $R_{Fühler}$ aus den vorerwähnten Gründen nicht in Phase sind und daher bei der Bestimmung des Reglerwerts ein Fehler auftritt. Um diesen Fehler zu vermeiden, wird in einer bevorzugten Variante erfindungsgemäß vorgeschlagen, dass die Messwerte $R_{REF}$, $R_{Fühler}$ auch in dem Vorlauftemperatur-Zyklus 12 in Phase gebracht werden. Dazu ist in der Vorlauftemperatureinrichtung 16 ein Phasenkorrekturmodul 17 vorgesehen, welches als Eingangsgrößen die unkorrigierten Messwerte $R_{Fühler}$, $R_{REF}$ erhält, zusammen mit den Parametern der Phasenkorrektur aus dem Dynamikfilter 5 des Kennlinien-Zyklus 11. Mit diesen Eingangsgrößen ist das Phasenkorrekturmodul 17 in der Lage, dieselbe Phasenkorrektur wie der Dynamikfilter 5 durchzuführen, wobei auf die jeweils aktuellen Parameter des Kennlinien-Zyklus 11 zurückgegriffen wird. Daher kann diese Phasenkorrektur in der kurzen Zykluszeit des Vorlauftemperatur-Zyklus 12 erfolgen. Als Ausgangswerte des Phasenkorrekturmoduls 17 stehen die weitestgehend in Phase gebrachten Messwerte $R_{REF}$, $R_{Fühler}$ zur Verfügung, die Ausgangspunkt sowohl für die Berechnung des Korrekturwerts $\Delta R$ als auch der Reglerwerts $R_{Regler}$ sind. Daher können der Korrekturwert $\Delta R$ und der Messwert $R_{Fühler}$ des Messfühlers 2 ohne Weiteres zu dem Reglerwert $R_{Regler}$ zusammenaddiert werden.

Insgesamt werden somit verschieden Varianten vorgeschlagen, die eine sehr genaue Ermittlung eines Korrekturwerts bzw. Reglerwerts für die Realisierung einer wärmeleistungsadaptiven Heizungsregelung auch bei älteren Heizungsregelungen ohne separaten Korrekturwerteingang ermöglichen. Auch bei Heizungsregelungen mit separatem Korrekturwerteingang kann es sinnvoll sein, die erfindungsgemäß vorgeschlagene Phasenkorrektur durchzuführen, damit das Signal des Messwertfühlers 2 und das Korrektursignal 4 zeitlich und in der absoluten Signalhöhe zusammenpassen.

**Bezugszeichenliste:**

| 1 | Vorrichtung zur Ermittlung eines Korrekturwertes |
| 2 | Messfühler |
| 3 | Kennlinienmodul |
| 4 | Referenzmessfühler |
| 5 | Dynamikfilter |
| 6 | Zeitmodul |
| 7 | Filtermodul |
| 8 | Auswahlmodul |
| 9 | Temperaturbestimmungsmodul |
| 10 | Korrekturmodul |
| 11 | Kennlinien-Zyklus |
| 12 | Vorlauftemperatur-Zyklus |
| 13 | Puffermodul |
| 14 | Glättungsmodul |
| 15 | Kennlinieneinrichtung |
| 16 | Vorlauftemperatureinrichtung |
| 17 | Phasenkorrekturmodul |

| | |
|---|---|
| $f_{Fühler}(R)$ | Kennlinie des Messfühlers |
| $F_{REF}(R)$ | Kennlinie des Referenzmessfühlers |
| $R_{Fühler}(R)$ | Umkehrkennlinie |
| $\vartheta_{Vorlauf}$ | Vorlauftemperatur |
| $\hat{\vartheta}_{VL}$ | Arbeitspunkt-Vorlauftemperatur (Schätzung) |
| $\tilde{\vartheta}_{VL}$ | Arbeitspunkt-Vorlauftemperatur (Messung) |
| $\Delta\vartheta_{Vorlauf}$ | Korrekturwertvorgabe |
| $R_{Fühler}$ | Messwert des Messfühlers, Widerstandswert |
| $R_{REF}$ | Messwert des Referenzmessfühlers, Widerstandswert |
| $R_{Regler}$ | Reglerwert |
| $R_{Filt}$ | korrigierter Messwert, Filterwert |
| $\Delta R$ | Korrekturwert |
| $\Delta T_R$ | Zeitversatz der Messwertfolgen |
| $\Delta T_{R.Rohsignale}$ | Zeitversatz der unkorrigierten Messwertfolgen |
| $\Delta T_{R.Filt}$ | Zeitversatz der korrigierten Messwertfolgen |
| $T_{PT1}$ | Zeitkonstante des Filtermoduls, Korrekturgröße |

**Patentansprüche**

1. Verfahren zur Ermittlung eines Korrekturwertes ($\Delta R$) auf Basis des Messwertes ($R_{Fühler}$) eines Messfühlers (2) und einer Korrekturwertvorgabe ($\Delta\vartheta_{Vorlauf}$) einer Vorlauftemperaturregelung, welche an eine Heizungsanlage mit einer Heizungsregelung zur Einstellung einer Vorlauftemperatur ($\vartheta_{Vorlauf}$) anschließbar ist, wobei eine Kennlinie ($f_{Fühler}(R)$, $f^1(\vartheta)$) des Messfühlers (2) durch Vergleich der Messwerte ($R_{Fühler}$) des Messfühlers (2) mit Messwerten ($R_{REF}$) eines Referenzmessfühlers (4) mit bekannter Kennlinie ($f_{REF}(R)$) detektiert wird, wobei der Korrekturwert ($\Delta R$) mit der detektierten Kennlinie ($f^1(\vartheta)$) und der Korrekturwertvorgabe ($\Delta\vartheta_{Vorlauf}$) bestimmt, mit dem Messwert ($R_{Fühler}$) des an die Heizungsregelung anschließbaren Messfühlers (2) zu einem Reglerwert ($R_{Regler}$) zusammengefasst und einem Anschluss der Heizungsregelung für den Messfühler (2) zugeleitet wird, **dadurch gekennzeichnet, dass** Messwertfolgen des Messfühlers (2) und Messwertfolgen des Referenzmessfühlers (4) in Phase zueinander gebracht werden und dass bei der Berechnung des Korrekturwerts ($\Delta R$) die detektierte Kennlinie ($f_{Fühler}(R)$, $f^1(\vartheta)$) und der in Phase gebrachte Messwert ($R_{REF}$) des Referenzmessfühlers (4) sowie die bekannte Kennlinie ($f_{REF}(R)$) des Referenzmessfühlers zur Bestimmung einer Arbeitspunkt-Vorlauftemperatur ($\vartheta_{VL}$) verwendet werden.

2. Verfahren nach Anspruch 1, **dadurch gekennzeichnet, dass** die Detektion der Kennlinie ($f_{Fühler}(R)$, $f^1(\vartheta)$) in einem Kennlinien-Zyklus (11) und die Berechnung des Korrekturwertes ($\Delta R$) und/oder Reglerwertes ($R_{Regler}$) in einem Vorlauftemperatur-Zyklus (12) erfolgen.

3. Verfahren nach Anspruch 2, **dadurch gekennzeichnet, dass** die Zykluszeit des Kennlinien-Zyklus (11) länger ist als die Zykluszeit des Vorlauftemperatur-Zyklus (12).

4. Verfahren nach einem der Ansprüche 2 oder 3, **dadurch gekennzeichnet, dass** die Parameter der detektierten Kennlinie ($f_{Fühler}(R)$, $f^1(\vartheta)$) aus dem Kennlinien-Zyklus (11) an den Vorlauftemperatur-Zyklus (12) übergeben werden.

5. Verfahren nach einem der Ansprüche 2 bis 4, **dadurch gekennzeichnet, dass** die Parameter der Phasenkorrektur aus dem Kennlinien-Zyklus (11) an den Vorlauftemperatur-Zyklus (12) übergeben werden.

6. Verfahren nach einem der Ansprüche 2 bis 5, **dadurch gekennzeichnet, dass** in dem Vorlauftemperatur-Zyklus (12) eine gleitende zeitliche Mittelwertbildung der Messwerte ($R_{Fühler}$, $R_{REF}$) und/oder der Korrekturwertvorgaben ($\Delta\vartheta_{Vorlauf}$) erfolgt.

7. Verfahren nach einem der vorhergehenden Ansprüche, **dadurch gekennzeichnet, dass** eine Optimierung der detektierten Kennlinie ($f_{Fühler}(R)$, $f^1(\vartheta)$) durch Auswertung des phasenkorrigierten Messwerts ($\tilde{R}_{Fühler}$) des Messfühlers (2) und der aktuellen, aus dem phasenkorrigierten Messwert ($\tilde{R}_{REF}$) mit der Kennlinie ($f_{REF}(R)$) berechneten Vorlauftemperatur ($\tilde{\vartheta}_{VL}$) erfolgt, indem für jeden neuen Messwert ein Vergleich der mit der rekonstruierten Kennlinie ($f_{Fühler}(R)$, $f^1(\vartheta)$ aus dem Messwert des Messfühlers ($\hat{R}_{Fühler}$) berechneten Vorlauftemperatur ($\hat{\vartheta}_{VL}$) und der durch den Referenzmessfühler mit der bekannten, genaueren Kennlinie ermittelten Vorlauftemperatur ($\tilde{\vartheta}_{VL}$) erfolgt.

8. Vorrichtung zur Ermittlung eines Korrekturwertes ($\Delta R$) auf Basis des Messwertes ($R_{Fühler}$) eines Messfühlers (2) und einer Korrekturwertvorgabe ($\Delta\vartheta_{Vorlauf}$) einer Vorlauftemperaturregelung, welche an eine Heizungsanlage mit einer Heizungsregelung zur Einstellung einer Vorlauftemperatur ($\Delta_{Vorlauf}$) anschließbar ist, mit einer Kennlinieneinrichtung (15) zur Detektion der Kennlinie ($R_{Fühler}(R)$, $f^1(\vartheta)$) des Messfühlers (2), in der eine Messwertfolge eines Referenzmessfühlers (4) und des Messfühlers (2) erfasst und die einzelnen Messwerte ($R_{Fühler}$) des Messfühlers (2) in Relation zu den Messwerten ($R_{REF}$) des Referenzmessfühlers (4) mit bekannter Kennlinie ($f_{REF}(R)$) gesetzt werden, und mit einer Vorlauftemperatureinrichtung (16), welche mit der detektierten Kennlinie ($f^1(\vartheta)$) und der Korrekturwertvorgabe ($\Delta\vartheta_{Vorlauf}$) den Korrekturwert ($\Delta R$) bestimmt, mit einem Messwert ($R_{Fühler}$) des an die Heizungsregelung anschließbaren Messfühlers (2) zu einem Reglerwert ($R_{Regler}$) zusammenfasst und einem Anschluss der Heizungsregelung für den Messfühler (2) zuleitet, **dadurch gekennzeichnet, dass** die Kennlinieneinrichtung (15) dazu eingerichtet ist, die Messwertfolge des Messfühlers (2) und Messwertfolge des Referenzmessfühlers (4) in Phase zueinander zu bringen und dass die Vorlauftemperatureinrichtung (16) dazu eingerichtet ist, bei der Berechnung des Korrekturwerts ($\Delta R$) den in Phase gebrachten Messwert ($\tilde{R}_{REF}$) des Referenzmessfühlers (4) sowie die bekannte Kennlinie ($f_{REF}(R)$) des Referenzmessfühlers (4) zur Bestimmung einer Arbeitspunkt-Vorlauftemperatur ($\vartheta_{VL}$) und die detektierte Kennlinie ($R_{Fühler}(R)$, $f^1(\vartheta)$) zu verwenden.

9. Vorrichtung nach Anspruch 8, **dadurch gekennzeichnet, dass** die Kennlinientemperatureinrichtung (15) innerhalb eines Kennlinie-Zyklus (11) und die Vorlauftemperatureinrichtung (16) innerhalb eines Vorlauftemperatur-Zyklus (12) arbeitet.

## Claims

1. A method for determining a correction value ($\Delta R$) on the basis of the measured value ($R_{sensor}$) of a measuring sensor (2) and a correction value set point ($\Delta\square_{flow}$) of a flow temperature control which can be connected to a heating installation with a heating control for setting a flow temperature ($\square_{flow}$), wherein a characteristic ($f_{sensor}(R)$, $f^{-1}(\square)$) of the measuring sensor (2) is detected by comparison of the measured values ($R_{sensor}$) of the measuring sensor (2) with measured values ($R_{REF}$) of a reference measuring sensor (4) with known characteristic ($f_{REF}(R)$), wherein the correction value ($\Delta R$) is determined with the detected characteristic ($f^{-1}(\square)$) and the correction value set point ($\Delta\square_{flow}$), is combined with the measured value ($R_{sensor}$) of the measuring sensor (2), which can be connected to the heating control, to form a controller value ($R_{controller}$) and is fed to a connection of the heating control for the measuring sensor (2), **characterised in that** measured value sequences of the measuring sensor (2) and measured value sequences of the reference measuring sensor (4) are brought into phase with one another and **in that** the detected characteristic ($f_{sensor}((R)$, $f^{-1}(\square)$) and the measured value ($R_{REF}$) of the reference measuring sensor. (4), which has been brought into phase, and also the known characteristic ($F_{REF}R$)) of the reference measuring sensor for determining a working-point flow temperature ($\square_{FL}$) are used during the calculation of the correction value ($\Delta$R).

2. The method according to Claim 1, **characterised in that** the detection of the characteristic ($f_{sensor}(R)$, $f^{-1}(\square)$) takes place in a characteristic cycle (11) and the calculation of the correction value ($\Delta$R) and/or the controller value ($R_{controller}$) takes place in a flow temperature cycle (12).

3. The method according to Claim 2, **characterised in that** the cycle time of the characteristic cycle (11) is longer than the cycle time of the flow temperature cycle (12).

4. The method according to one of Claims 2 or 3, **characterised in that** the parameters of the detected characteristic ($f_{sensor}(R)$, $f^{-1}$ ($\square$) ) are passed from the characteristic cycle (11) to the flow temperature cycle (12).

5. The method according to one of Claims 2 to 4, **characterised in that** the parameters of the phase correction are passed from the characteristic cycle (11) to the flow temperature cycle (12).

6. The method according to one of Claims 2 to 5, **characterised in that** a sliding temporal averaging of the measured values ($R_{sensor}$. $R_{REF}$) and/or the correction value set points ($\Delta\square_{flow}$) takes place in the flow temperature cycle (12).

7. The method according to the preceding claims, **characterised in that** an optimisation of the detected characteristic ($f_{sensor}(R)$, $f^{-1}(\square)$) takes place by means of evaluation of the phase-corrected measured value ($\tilde{R}_{sensor}$) of the measured value (2) and the current flow temperature ($\ddot{\vartheta}_{FL}$) calculated from the phase-corrected measured value ($\tilde{R}_{REF}$) using the characteristic ($f_{REF}(R)$) in that a comparison of the flow temperature ($\vartheta_{FL}$) calculated from the measured value of the measuring sensor ($\tilde{R}_{sensor}$) using the reconstructed characteristic ($f_{sensor}(R)$, $f^{-1}(\square)$) and the flow temperature ($\ddot{\vartheta}_{FL}$) determined by means of the reference measuring sensor using the known, more precise characteristic takes place for each new measured value.

8. A device for determining a correction value ($\Delta$R) on the basis of the measured value ($R_{sensor}$) of a measuring sensor (2) and a correction value set point ($\Delta\square_{flow}$) of a flow temperature control which can be connected to a heating installation with a heating control for setting a flow temperature ($\square_{flow}$), with a characteristic apparatus (15) for detecting the characteristic ($f_{sensor}(R)$, $f^{-1}(\square)$) of the measuring sensor (2), in which a measured value sequence of a reference measuring sensor (4) and the measuring sensor (2) are detected and the individual measured values ($R_{sensor}$) of the measuring sensor (2) are placed in a relation with the measured values ($R_{REF}$) of the reference measuring sensor (4) with known characteristic ($f_{REF}(R)$), and with a flow temperature apparatus (16), which determines the correction value ($\Delta$R) using the detected characteristic ($f^{-1}(\square)$) and the correction value set point ($\Delta\square_{flow}$), combines the same with a measured value ($R_{sensor}$) of the measuring sensor (2), which can be connected to the heating control, to form a controller value ($R_{controller}$) and feeds the same to a connection of the heating control for the measuring sensor (2), **characterised in that** the characteristic apparatus (15) is set up to bring the measured value sequence of the measuring sensor (2) and measured value sequence of the reference measuring sensor (4) into phase with one another and **in that** the flow temperature apparatus (16) is set up to use the measured value ($\tilde{R}_{REF}$) of the reference measuring sensor (4), which has been brought into phase, and also the known characteristic ($f_{REF}(R)$) of the reference measuring sensor (4) for determining a working-point flow temperature ($\square_{FL}$) and the detected characteristic ($f_{sensor}(R)$, $f^{-1}(\square)$) during the calculation of the correction value ($\Delta$R).

9. The device according to Claim 8, **characterised in that** the characteristic apparatus (15) operates with a characteristic cycle (11) and the flow temperature apparatus (16) operates within a flow temperature cycle (12).

**Revendications**

1. Procédé pour déterminer une valeur de correction ($\Delta R$) sur la base de la valeur mesurée ($R_{Sonde}$) d'une sonde de mesure (2) et d'une spécification de valeur de correction ($\Delta\vartheta_{Aller}$) d'une régulation de température aller, qui peut être raccordée à une installation de chauffage avec une régulation de chauffage pour le réglage d'une température aller ($\vartheta_{Aller}$), une courbe caractéristique ($\int_{Sonde}(R)$, $\int^{-1}(\vartheta)$ de la sonde de mesure (2) étant détectée par comparaison des valeurs mesurées ($R_{Sonde}$) de la sonde de mesure (2) avec des valeurs de mesure ($R_{REF}$) d'une sonde de mesure de référence (4) avec courbe caractéristique ($\int_{REF}(R)$) connue, la valeur de correction ($\Delta R$) étant

déterminée avec la courbe caractéristique ($\int^{-1}(\vartheta)$ détectée et la spécification de valeur de correction ($\Delta\vartheta_{Aller}$), est regroupée avec la valeur de mesure ($R_{Sonde}$) de la sonde de mesure (2) pouvant être raccordée à la régulation de chauffage pour former une valeur de régulateur ($R_{Regler}$) et étant acheminée à un raccordement de la régulation de chauffage pour la sonde de mesure (2), **caractérisé en ce que** des séquences de valeurs de mesure de la sonde de mesure (2) et des séquences de valeurs de mesure de la sonde de mesure de référence (4) sont mises en phase et **en ce que**, lors du calcul de la valeur de correction ($\Delta R$), la courbe caractéristique détectée ($\int_{Sonde}(R)$, $f^{-1}(\vartheta)$) et la valeur mesurée ($R_{REF}$), mise en phase, de la sonde de mesure de référence (4) ainsi que la courbe caractéristique connue ($\int_{REF}(R)$) de la sonde de mesure de référence sont utilisées pour déterminer une température aller au point de travail ($\vartheta_{VL}$).

2. Procédé selon la revendication 1, **caractérisé en ce que** la détection de la courbe caractéristique ($\int_{Sonde}(R)$, $\int^{-1}(\vartheta)$) et le calcul de la valeur de correction ($\Delta R$) et/ou de la valeur de régulateur ($R_{Regler}$) s'effectuent respectivement dans un cycle de courbe caractéristique (11) et dans un cycle de température aller (12).

3. Procédé selon la revendication 2, **caractérisé en ce que** le temps de cycle du cycle de courbe caractéristique (11) est plus long que le temps de cycle du cycle de température aller (12).

4. Procédé selon l'une des revendications 2 ou 3, **caractérisé en ce que** les paramètres de la courbe caractéristique détectée ($\int_{Sonde}(R)$, $\int^{-1}(\vartheta)$) provenant du cycle de courbe caractéristique (11) sont transmis au cycle de température aller (12).

5. Procédé selon l'une des revendications 2 à 4, **caractérisé en ce que** les paramètres de la correction de phases provenant du cycle de courbe caractéristique (11) sont transmis au cycle de température aller (12).

6. Procédé selon l'une des revendications 2 à 5, **caractérisé en ce que** dans le cycle de température aller (12) intervient une formation de valeur moyenne glissante dans le temps des valeurs mesurées ($R_{Sonde}$, $R_{REF}$) et/ou des spécifications de la valeur de correction ($\Delta\vartheta_{Aller}$).

7. Procédé selon l'une des revendications précédentes, **caractérisé en ce qu'**une optimisation de la courbe caractéristique détectée ($\int_{Sonde}(R)$, $\int^{-1}(\vartheta)$) s'effectue par l'analyse de la valeur de mesure ($\tilde{R}_{Sonde}$) corrigée au niveau de la phase de la sonde mesurée (2) et de la température aller ($\tilde{\vartheta}_{VL}$) actuelle, calculée à partir de la valeur mesurée ($\tilde{R}_{REF}$) corrigée au niveau de la phase avec la courbe caractéristique ($\int_{REF}(R)$), en procédant pour chaque nouvelle valeur mesurée à une comparaison de la température aller ($\tilde{\vartheta}_{VL}$) calculée avec la courbe caractéristique reconstruite ($\int_{Sonde}(R)$, $\int^{-1}(\vartheta)$) à partir de la valeur mesurée de la sonde de mesure ($\tilde{R}_{Sonde}$) et de la température aller ($\tilde{\vartheta}_{VL}$) déterminée par la sonde de mesure de référence avec la courbe caractéristique connue et plus précise.

8. Dispositif pour déterminer une valeur de correction ($\Delta R$) sur la base de la valeur mesurée ($R_{Sonde}$) d'une sonde de mesure (2) et d'une spécification de valeur de correction ($\Delta\vartheta_{Aller}$) d'une régulation de température aller, qui peut être raccordée à une installation de chauffage avec une régulation de chauffage pour le réglage d'une température aller ($\vartheta_{Aller}$), comprenant un dispositif de courbe caractéristique (15) pour la détection de la courbe caractéristique (($\int_{Sonde}(R)$, $\int^{-1}(\vartheta)$) de la sonde de mesure (2), dans lequel une séquence de valeurs mesurées d'une sonde de mesure de référence (4) et de la sonde de mesure (2) est enregistrée et les valeurs mesurées ($R_{Sonde}$) individuelles de la sonde de mesure (2) sont mises en relation avec les valeurs mesurées ($R_{REF}$) de la sonde de mesure de référence (4) avec la courbe caractéristique ($\int_{REF}(R)$) connue, et un dispositif de température aller (16), qui détermine la valeur de correction ($\Delta R$) avec la courbe caractéristique détectée ($\int^{-1}(\vartheta)$) et la spécification de valeur de correction ($\Delta\vartheta_{Aller}$), avec une valeur de mesure ($R_{Sonde}$) de la sonde de mesure (2) pouvant être raccordée à la régulation de chauffage pour former une valeur de régulateur ($R_{Regler}$) et l'achemine à un branchement de la régulation de chauffage pour la sonde de mesure (2), **caractérisé en ce que** le dispositif de courbe caractéristique (15) est équipé pour mettre en phase la séquence de valeurs de mesure de la sonde de mesure (2) et la séquence de valeurs de mesure de la sonde de mesure de référence (4) et **en ce que** le dispositif de température aller (16) est équipé pour utiliser lors du calcul de la valeur de correction ($\Delta R$) la valeur mesurée ($\tilde{R}_{REF}$) mise en phase de la sonde de mesure de référence (4) ainsi que la courbe caractéristique connue ($\int_{REF}(R)$) de la sonde de mesure de référence (4) pour la détermination de la température aller au point de travail ($\vartheta_{VL}$), et la courbe caractéristique détectée ($\int_{Sonde}(R)$, $\int^{-1}(\vartheta)$).

9. Dispositif selon la revendication 8, **caractérisé en ce que** le dispositif de température de courbe caractéristique (15) travaille à l'intérieur d'un cycle de courbe caractéristique (11) et le dispositif de température aller (16) à l'intérieur d'un cycle de température aller (12).

Fig. 1

$\Delta R = f^{-1}(\theta_{VL}, \Delta\theta_{Vorlauf})$

$R_{Regler} = R_{Fühler} + \Delta R$

$\Delta R$

10

3

$\theta_{VL} = f_{Fühler}(R_{Fühler})$

$R_{Fühler} = f^{-1}(\theta_{Vorlauf})$

$\Delta\theta_{Vorlauf}$

1

$R_{Fühler,Filt}$

$R_{Fühler}$

$\Delta\varphi = 0$

Freigabesignal

9

$\theta_{Vorlauf} = f_{REF}(R_{Ref})$

$R_{Ref}$

$R_{Ref}$

$R_{Ref,Filt}$

$\theta_{Vorlauf}$

$\Delta T_{R,Rohsignale} < 0$

$\Delta T_{R,Rohsignale} > 0$

8

8

6

$\Delta T_{R,x}$

$T_{TP1}$

$T_{TP1}$

7

7

5

2

$R_{Fühler}$

$R_{Ref}$

4

$\theta_{Vorlauf}$

Fig. 2

15

Fig. 3

EP 2 246 679 B1

1

2

13

5

$\tilde{R}_{Fühler}$

3

**Kennlinien-Zyklus**

11

$R_{Fühler}$

$\theta_{Vorlauf}$

13

$\Delta\varphi = 0$

9

$\theta_{VL} = f_{Fühler}(R_{Fühler})$

$R_{Fühler} = f^{-1}_{Fühler}(\theta_{VL})$

15

$R_{REF}$

$\theta_{VL} = f_{REF}(R_{REF})$

$\tilde{\theta}_{VL}$

4

$\tilde{R}_{REF}$

Parameter der
Phasenkorrektur

Parameter der
Umkehrkennlinie

14

9

$\tilde{R}_{REF, akt}$

$\theta_{VL} = f_{REF}(R_{REF})$

$\tilde{\theta}_{VL}$

$f^{-1}_{Fühler}(\tilde{\theta}_{VL})$

10

14

$\Delta\varphi = 0$

$f^{-1}_{Fühler}(\tilde{\theta}_{VL} + \Delta\theta_{VL})$

16

17

$\tilde{R}_{Fühler}$

$+$
$+$

$\Delta\tilde{R} = f_{Fühler}(\tilde{\theta}_{VL} + \Delta\theta_{VL}) - f_{Fühler}(\tilde{\theta}_{VL})$

$\Delta\tilde{R}$

14

$\Delta\theta_{Vorlauf}$

$\Delta\theta_{Vorlauf}$

$+$
$+$

$\tilde{R}_{Regler} = \tilde{R}_{Fühler} + \Delta\tilde{R}$

**Vorlauftemperatur-
Zyklus**

12

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1456727 B1
- DE 102005012579 A1
- EP 1927812 A2
- DE 102008047954

### In der Beschreibung aufgeführte Nicht-Patentliteratur

- **Yang.** First-order compensation for time lag in dynamic calibration of industrial thermometers. *Measurement Science and Tecnology,* 20. November 2008, vol. 20, 015109